**Europäisches Patentamt**

**European Patent Office**

**Office européen des brevets**

(19)

(11) Veröffentlichungsnummer: **0 234 214**
**B1**

(12) **EUROPÄISCHE PATENTSCHRIFT**

(45) Veröffentlichungstag der Patentschrift:
08.08.90

(51) Int. Cl.⁵: **B27B 5/16**

(21) Anmeldenummer: **87100366.1**

(22) Anmeldetag: **14.01.87**

(54) Schiebetisch für Tischkreissägen.

(30) Priorität: **28.02.86 DE 3606526**

(43) Veröffentlichungstag der Anmeldung:
**02.09.87 Patentblatt 87/36**

(45) Bekanntmachung des Hinweises auf die Patenterteilung:
**08.08.90 Patentblatt 90/32**

(84) Benannte Vertragsstaaten:
**DE ES FR GB IT**

(56) Entgegenhaltungen:
**AT-B- 220 799**
**DE-A- 2 910 095**
**DE-C- 863 546**

(73) Patentinhaber: **Black & Decker Overseas AG,
Staedtle 36, FL-9490 Vaduz(LI)**

(72) Erfinder: **Bergler, Otto, Jahnstrasse 18/1,
D-7130 Mühlacker-Lomersheim(DE)**

(74) Vertreter: **Wilhelm, Hans-Herbert, Dr.-Ing. et al, Wilhelm
& Dauster Patentanwälte Hospitalstrasse 8,
D-7000 Stuttgart 1(DE)**

**Beschreibung**

Die Erfindung betrifft einen Schiebetisch für Tischkreissägen nach dem Oberbegriff des Patentanspruches 1.

Solche Schiebetische sind bekannt (DE-PS 29 10 095). Bei den bekannten Bauarten werden zwei Führungsstangen fest an einer Standwand der Ständeranordnung verbunden und an ihrem anderen Ende in einen frei stehenden Ständer gehalten. Auf diese senkrecht zur Sägeblattebene verlaufenden Tragstange wird dann eine Befestigungsplatte aufgelegt, die ihrerseits jeweils wieder zwei parallel zur Sägeblattebene verlaufende Führungsstangen trägt, auf denen ein Schiebetisch für die Bearbeitung von länglichen Werkstücken an der Tischsäge geführt ist. Nachteilig ist der relativ umständliche An- und Abbau einer solchen Schiebetischeinrichtung, der für den Einsatz der dort vorgesehenen kombinierten Tisch- und Gehrungssäge für Kapp- und Gehrungssägen jeweils abmontiert werden muß. Nachteilig ist auch, daß die bekannte Schiebetischanordnung zu viel Einzelteile aufweist, die keine für alle Bearbeitungsfälle ausreichende Stabilität aufweisen.

Der Erfindung liegt daher die Aufgabe zugrunde, eine stabile, aber einfach zu montierende und wieder außer Betrieb zu nehmende Anordnung für einen Schiebetisch zu schaffen, der insbesondere für den Einsatz für kombinierte Tisch- und Gehrungssägen geeignet ist, bei denen das an der schwenkbaren Arbeitsplatte angeordnete Sägeaggregat sowohl zum Tisch- als auch zum Kapp- und Gehrungssägen einsetzbar ist.

Zur Lösung dieser Aufgabe werden bei einem Schiebetisch der eingangs genannten Art die kennzeichnenden Merkmale des Patentanspruches l vorgesehen. Durch diese Ausgestaltung wird die Möglichkeit eröffnet, das Führungsgestell in sehr einfacher Weise an dem Sägeaggregat anbringen zu können. Möglich ist es auch, den Schiebetisch bei Nichtgebrauch in einfacher Weise seitlich abzuklappen, wenn eine solche Lösung zweckmäßig erscheint. Die ganze Anordnung wird zudem aus einer, beispielsweise als ein gezogenes Hohlprofil ausgebildeten Profilschiene gebildet, die sehr stabil ist.

Vorteilhafte Weiterbildungen der Erfindung ergeben sich aus den Unteransprüchen, wobei die Merkmale des Anspruches 2 den Vorteil mit sich bringen, daß die Tragwinkel an den beiden Enden der Standwand angebracht werden können, so daß eine breite Basis für die Lagerung der Profilschiene entsteht. Die Merkmale des Anspruches 4 bringen den Vorteil mit sich, daß bei einer einmal justierten Anpassung der Profilschiene zum An- und Abnehmen nur ein einfacher Ein- oder Ausrastvorgang notwendig ist. Die Merkmale der Ansprüche 5 und 6 erlauben die einfache Justierung.

Die Merkmale der Ansprüche 7 und 8 bieten die Möglichkeit, die Profilschiene bei Bedarf in ihrer Längsrichtung nach der einen oder anderen Seite herauszuziehen zu können, so daß bei gleicher Länge der Profilschiene, also bei gleichem Raumbedarf, der Sägebereich vergrößert werden kann.

Die Merkmale der Unteransprüche 9 bis 11 und 14 erlauben eine einfache Justierung der Schwenklage der Profilschiene gegenüber der Standwand, ohne daß für eine Demontage ein zu großer Aufwand erforderlich ist. Die Merkmale des Anspruches 13 schließlich sorgen für eine sichere Fixierung der Führungseinrichtung für den Schiebetisch im eingebauten Zustand.

Die Erfindung ist in der beigefügten Zeichnung anhand eines Ausführungsbeispieles dargestellt und im folgenden erläutert.
Es zeigen:

Fig. 1 eine schematische Frontansicht einer kombinierten Tisch- und Gehrungssäge mit an beiden Seiten angeordneten Schiebetischen gemäß der Erfindung,

Fig. 2 die vergrößerte Darstellung einer der Führungseinrichtungen der Fig. 1 für den Schiebetisch,

Fig. 3 die schematische und teilweise aufgebrochene Ansicht des Schiebetisches der Fig. 2 in Richtung des Pfeiles III gesehen und

Fig. 4 den Teilschnitt durch Fig. 3 längs der Linie IV-IV.

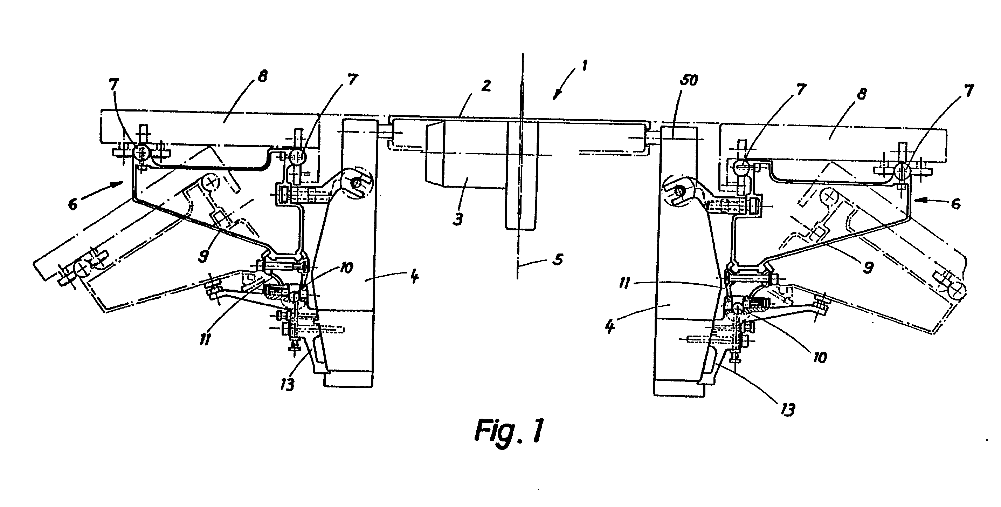

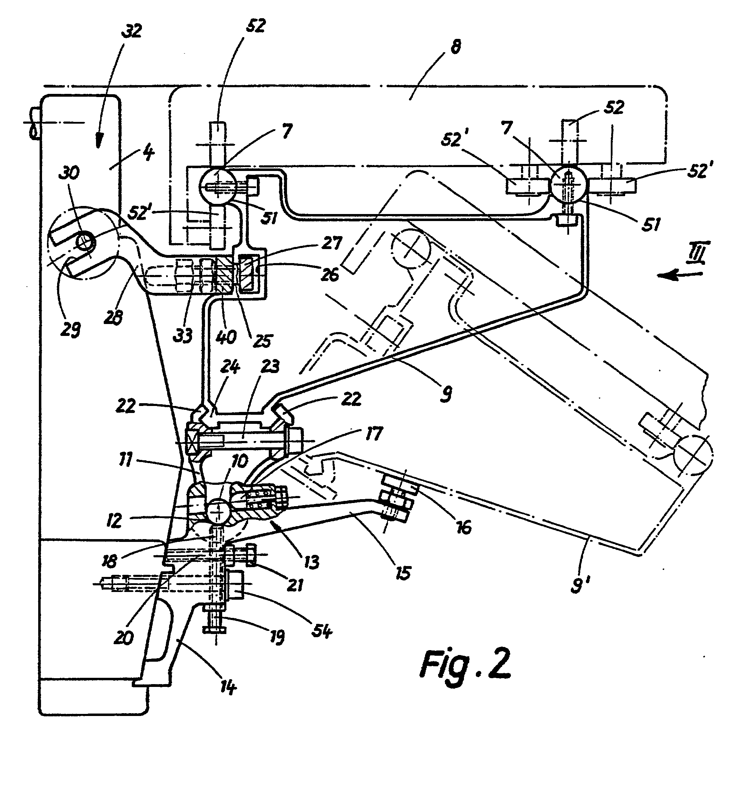

In der Fig. 1 ist eine kombinierte Tisch- und Gehrungssäge (1) gezeigt, bei der eine schwenkbare Arbeitsplatte (2) mit einem daran befestigten Sägeaggregat (3) schwenkbar um die Achse (50) in zwei seitlichen Standwänden (4) einer nicht näher gezeigten Ständeranordnung gelagert ist. An jeder der beiden Standwände (4) ist außen jeweils ein Führungsgestell (6) für einen oder mehrere Schiebetische (8) angeordnet, das, wie anhand der Fig. 2 näher erläutert werden wird, so ausgebildet ist, daß es leicht an- und abzubauen und auch, wie Fig. 1 zeigt, symmetrisch zur Sägeblattebene (5) anzuordnen ist.

Jede der beiden Führungsgestelle (6) der Fig. l ist identisch ausgebildet. Die anhand der Fig. 2 gegebene Erläuterung für das rechte der beiden Führungsgestelle gilt daher auch für das andere Führungsgestell.

Wie aus Fig. 2 erkennbar ist, ist das Kernstück der neuen Schiebetischanordnung eine aus einem gezogenen Hohlprofil, beispielsweise aus Aluminium bestehende Führungsschiene (9), die in ihrem oberen Bereich jeweils mit halbrunden Ausnehmungen (51) zur Aufnahme von Führungsstangen (7) versehen ist, die fest mit der Profilschiene (9) verschraubt sind. Auf diesen Führungsstangen (7) laufen Rollen (52) eines Führungsschlittens (8), der im übrigen in bekannter Weise mit Gegen- und Seitenführungsrollen (52') definiert an den Führungsstangen (7) geführt ist.

Die Profilschiene (9) weist in ihrem unteren Bereich eine Profilierung in der Art einer Klemmleiste (24) auf, die jeweils von zwei Klemmarmen (22) je eines Lagerbockes (11) übergriffen ist, die mit Hilfe der Klemmschraube (23) an der Klemmleiste (24) auch gesichert sind.

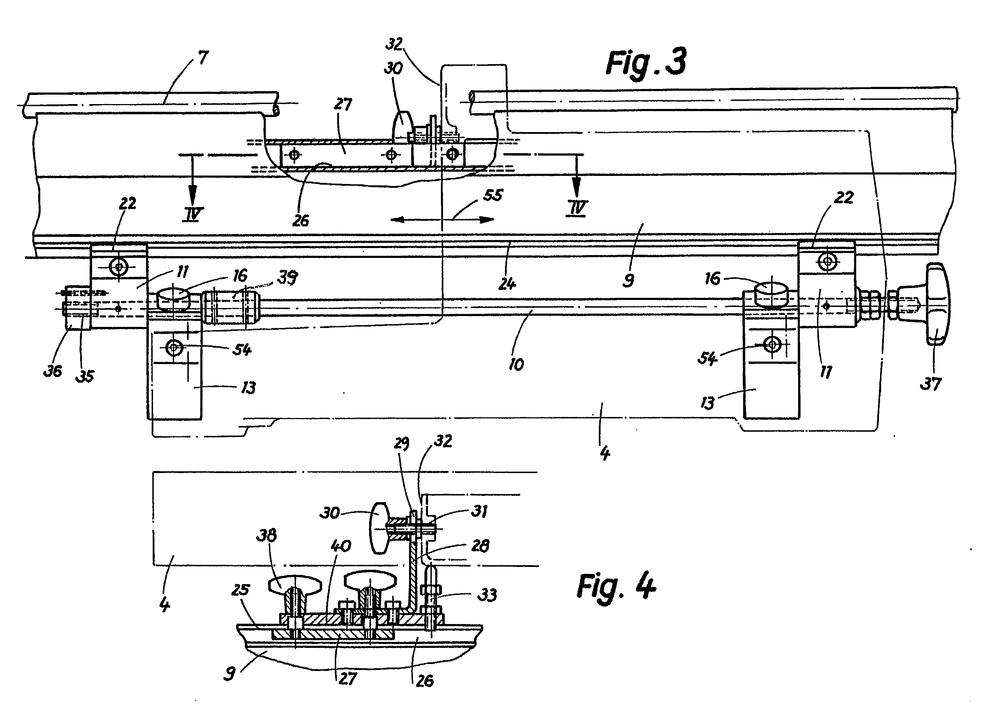

Jeder Lagerbock (11) nimmt, wie auch Fig. 3 zeigt, eine durchgehende Lagerstange (10) in einem Auge auf. Die auf diese Weise fest mit der Profilschiene (9) verbundene Lagerstange ihrerseits wird, wie ebenfalls anhand der Fig. 2 und 3 deutlich zu erkennen ist, in nach oben offene, dem Querschnitt der Lagerstange (10) angepaßte Nuteinschnitte eingesetzt, die Lagerausnehmungen (12) in Tragwinkeln (13) bilden, die jeweils mit einer Befestigungsschraube (54) fest an der Außenseite der Standwand (4) angeordnet sind. Die Tragwinkel (13) werden dabei jeweils im Bereich der äußersten Enden der Standwand (4) befestigt, so daß sich eine stabile und breite Basis für die Lagerung der Lagerstange (10) und der daran angeordneten Profilschiene (9) ergibt.

Aus Fig. 2 ergibt sich, daß in jede Lagerausnehmung ein federnder Sicherungsbolzen (17) so hereingreift, daß er beim Einsetzen der Lagerstange (10) zur Seite gedrückt wird und anschließend die Lagesicherung der Lagerstange (10) in der Lagerausnehmung (12) übernehmen kann.

Die Profilschiene (9) wird auf diese Weise an den Tragwinkeln (13) gehalten. Diese Tragwinkel (13) bestehen aus einem sich mit einem Arm unten an der Standwand (4) abstützenden Profil (14), das einen zweiten Arm (15) aufweist, der mit einem Auflager (16) für die Profilschiene versehen ist, wenn diese in die Lage (9') abgekippt werden soll.

In ihrer Betriebslage wird die Profilschiene (9) dadurch in der in der Fig. 2 gezeigten Lage gehalten, daß sie im Bereich oberhalb der Lagerböcke (11), aber etwas unterhalb der Führungsstangen (7) mit einer durchgehenden Nut (26) versehen ist, die einen nach außen offenen Schlitz (25) aufweist. Durch diesen Schlitz (25) greift ein Gleitstein (27) hindurch, der längsverschiebbar in der Nut (26) geführt ist. Der Gleitstein (27) wird, wie aus Fig. 4 erkennbar ist, über Flügelschrauben (38) an einem Klemmgegenstück (40) gehalten, das seinerseits fest mit einem Befestigungswinkel (28) verbunden ist. Dieser Befestigungswinkel (28) weist (Fig. 2) an seinem freien Ende eine Gabel (29) auf, die zwischen einen senkrecht zur Sägeblattebene (5) verlaufende Wandfläche (32) der Standwand (4) und eine Flügelschraube (30) greift, die in eine Gewindebohrung (31) an der Standwand (4) eingreift. Der Befestigungswinkel (28) läßt sich daher, da seine Gabel so angeordnet ist, daß sie mit ihren parallelen Flächen etwa auf Tangenten liegt, die an einem um die Achse der Lagerstange (10) verlaufenden Kreis anliegen, in einfacher Weise nach dem Lösen der Flügelschraube (30) im Uhrzeigersinn mit der Profilschiene (9) abschwenken, wenn dies gewünscht ist. Umgekehrt läßt sich die Profilschiene (9), nach dem Einrasten ihrer Lagerstange (10) in die Lagerausnehmungen (12) auch in einfacher Weise an der Standwand anklemmen, wenn der Befestigungswinkel (28) die Klemmlage eingenommen hat.

Zum Einstellen der genauen Position der Profilschiene (9) und des Schlittens (8) dienen verschiedene Einstellschrauben. So ist zum einen dem Gleitstein (27) bzw. dessen Klemmgegenstück (40) eine Stellschraube (33) zugeordnet, die sich in der Einbaulage als Anschlag an der Standwand (4) abstützt. Die Tragwinkel (13) sind außerdem mit in senkrechten Richtungen zueinander im Gewinden (18) bzw. (20) führbaren Stellschrauben (19) bzw. (21) versehen, mit denen sowohl die Lage der Tragwinkel (13) selbst, als auch die Lage der Lagerstange (10) innerhalb der Lagerausnehmung (12) einstellbar ist. Die genaue Lage wird mit Hilfe dieser Stellschrauben einjustiert. Ist dies einmal geschehen, so kann die Profilschiene (9) nach dem Lösen der Flügelschraube (30) entweder seitlich in die Lage (9') abgeklappt, oder gänzlich abgenommen werden, was durch Ausrasten des Sicherungsbolzens (17) in einfacher Weise geschehen kann. Die Profilschiene braucht zu diesem Zweck nur aus den Lagerausnehmungen (12) herausgehoben werden.

Die neue Schiebetischanordnung eröffnet auch noch die Möglichkeit, die Profilschiene (9) in Richtung der Pfeile (55) der Fig. 3 relativ zur Standwand (4) verschieben zu können. Dadurch kann bei gleich bleibender Länge der Profilschiene (9) der Sägebereich bedeutend vergrößert werden.

Das geschieht dadurch, daß zum einen der Gleitstein (27) von seinem Klemmgegenstück (40) lösbar ist, so daß er frei in Längsrichtung (26) gleiten kann. Zum anderen ist eine Längsverschiebung nach dem Lösen der Klemmschraube (23) und der beiden Klemmarme (22) der Lagerböcke (11) ebenfalls möglich, so daß die Profilschiene (9) im Sinne der Pfeile (55) der Fig. 3 nach der einen oder anderen Richtung verschoben werden kann.

Die Profilschiene (9) kann, wie vorher erwähnt, nach Abnahme des Tischbeschlittens (8) seitlich abgekippt werden (Lage 9'). Eine Kante des Schiebeschlittens (8) kann dann in Höhe des Niveaus der Arbeitsplatte in der Stellung Gehrungssägen liegen und als zusätzliche Auflage für Werkstücke dienen. Möglich ist es aber auch, nur den Schiebeschlitten (8) abzuheben und die Führungsstange (7) beide als Auflager zu benutzen, wenn die Abmessungen entsprechend gewählt wurden. In diesem Fall brauchen alle Klemmverbindungen nicht gelöst zu werden.

Wie aus Fig. 3 hervorgeht, ist die Lagerstange (10) an einem Ende mit einem Gewinde (35) und einer drehfest gegenüber einem Lagerbock (11) angeordneten Mutter (36) versehen. An ihrem anderen Ende weist die Lagerstange (10) einen Handgriff (37) auf, durch dessen Verdrehung der dem Handgriff (37) benachbarte Lagerbock (11), der fest auf der sich axial in die Mutter (36) hereinschraubenden Lagerstange sitzt, gegen den benachbarten Tragwinkel (13) gedrückt wird. Analog drückt sich eine fest auf der Lagerstange (10) sitzende Hülse (39) gegen den zweiten Tragwinkel (13). Die Profilschiene (9) läßt sich auf diese Weise schnell und einfach, aber auch sicher an der Standwand (4) fixieren. Die Ausgestaltung kann so getroffen werden, daß ein ausreichender Halt der Führungseinrichtung an der Standwand gesichert ist, so daß auch auf die Anordnung der Befestigungswinkel (28) verzichtet werden könnte.

**Patentansprüche**

1. Schiebetisch für Tischkreissägen, insbesondere für kombinierte Tisch- und Gehrungssägen mit einer wendbaren Arbeitsplatte für das Sägeaggregat, die zwischen zwei Standwänden einer Ständeranordnung schwenkbar gelagert ist, wobei an einer der Standwände ein Führungsgestell mit parallel zur Sägeblattebene verlaufenden Führungsstangen für einen Schiebeschlitten vorgesehen ist, dadurch gekennzeichnet, daß das Führungsgestell aus einer Profilschiene (9) mit den an ihrer Oberseite befestigten Führungsstangen (7) besteht, die an einer im unteren Bereich einer Standwand (4) liegenden, parallel zur Sägeblattebene (5) verlaufenden Achse (10) aufliegt und gegen eine Verdrehung um die Achse (10) seitlich gehalten ist.

2. Schiebetisch nach Anspruch 1, dadurch gekennzeichnet, daß die Achse als eine mit zwei Lagerböcken (11) mit der Profilschiene (9) verbundene Lagerstange (10) ausgebildet ist, die in Lagerausnehmungen (12) von zwei an der Standwand (4) angeordneten Tragwinkeln (13) gehalten ist.

3. Schiebetisch nach den Ansprüchen 1 und 2, dadurch gekennzeichnet, daß die Tragwinkel (13) aus an der Standwand (4) angeschraubten Profilstücken (14) bestehen, die einen von der Standwand abragenden Stützarm (15) mit einem Auflager (16) für die abgeklappte Profilschiene (9) aufweisen.

4. Schiebetisch nach den Ansprüchen 1 und 2, dadurch gekennzeichnet, daß die Lagerausnehmungen (12) der Tragwinkel (13) als nach oben offene, dem Querschnitt der Lagerstange (10) angepaßte Nuteinschnitte ausgebildet sind, in die seitlich ein federnder Sicherungsbolzen (17) für die eingelegte Lagerstange (10) eingreift.

5. Schiebetisch nach Anspruch 4, dadurch gekennzeichnet, daß in die Lagerausnehmungen (12) senkrecht von unten erste Gewindebohrungen (18) münden, in denen Stellschrauben (19) zur Lageeinstellung der Lagerstelle (10) eingreifen.

6. Schiebetisch nach den Ansprüchen 4 und 5, dadurch gekennzeichnet, daß die Tragwinkel (13) mit etwa senkrecht zu den ersten Gewindebohrungen (18) verlaufenden zweiten Gewindebohrungen versehen sind, durch die Stellschrauben (21) greifen, die an der Standwand (4) anlegbar sind.

7. Schiebetisch nach Anspruch 2, dadurch gekennzeichnet, daß die Lagerböcke (11) an ihren von der Lagerstange (10) abgewandten Enden mit Klemmarmen (22) versehen sind, die mit Hilfe einer Klemmschraube (23) o.dgl. an eine, einen Teil der Profilschiene (9) bildende Klemmleiste (24) anlegbar sind.

8. Schiebetisch nach den Ansprüchen 1 und 2, dadurch gekennzeichnet, daß die Profilschiene (9) oberhalb ihrer Lagerstange (10) eine mit einem offenen Schlitz (25) versehene Führungsnut (26) für einen Gleitstein (27) o.dgl. aufweist, der mit der Standwand (4) verbindbar ist.

9. Schiebetisch nach Anspruch 8, dadurch gekennzeichnet, daß der Gleitstein (27) mit einem Befestigungswinkel (28) verbunden ist, der ein freies Gabelende (29) besitzt, mit dem er über eine Flügelschraube (30) an einer Gewindebohrung (31) der Standwand (4) befestigbar ist.

10. Schiebetisch nach Anspruch 9, dadurch gekennzeichnet, daß die Gewindebohrung (31) in einem senkrecht zu der Lagerstange (10) verlaufenden Wandabschnitt (32) der Standwand (4) angeordnet ist.

11. Schiebetisch nach Anspruch 8, dadurch gekennzeichnet, daß dem Gleitstein (27) eine senkrecht zu der Führungsnut (26) verlaufende und an der Stellwand (4) einlegbare Einstellschraube (33) zugeordnet ist.

12. Schiebetisch nach Anspruch 1 für eine kombinierte Tisch- und Gehrungssäge, dadurch gekennzeichnet, daß die Profilschiene (9) und ihre Lagerung (10, 11) so bemessen sind, daß eine Kante des Schiebeschlittens (8) bei abgeklappter Lage (9') der Profilschiene auf dem Niveau der für das Gehrungssägen benutzten Seite der Arbeitsplatte (2) liegt.

13. Schiebetisch nach den Ansprüchen 1 und 2, dadurch gekennzeichnet, daß die Lagerstange (10) mindestens an einem Ende mit einem Gewinde (35) und einer drehfest gegenüber einem Lagerbock (11) angeordneten Mutter (36) und am anderen Ende mit einem Handgriff (37) versehen ist, über den eine axiale Verspannung zwischen den Tragwinkeln (13) und den Lagerböcken (11) bewirkbar ist.

14. Schiebetisch nach den Ansprüchen 8 und 9, dadurch gekennzeichnet, daß dem Gleitstein (27) Flügelschrauben (38) zugeordnet sind, die durch ein fest am Befestigungswinkel (28) angeordnetes Klemmgegenstück (40) greifen.

15. Schiebetisch nach Anspruch 1, dadurch gekennzeichnet, daß die Profilschiene (9) und ihre Lagerung (10, 11) so bemessen sind, daß beide Führungsstangen (7) bei abgenommenem Schiebeschlitten (8) auf dem Niveau der für das Gehrungssägen benutzten Seite der Arbeitsplatte (2) liegen.

## Claims

1. Sliding table for table circular saws, in particular for combined table and mitre box saws with a reversible operating plate for the saw unit which is pivotally mounted between two upright walls of stand arrangement, a guide frame having guide rods for a slide carriage extending parallel to the saw blade plane being provided on one of the upright walls, characterised in that the guide frame consists of a profile rail (9) with the guide rods (7) secured to the upper side thereof, the profile rail (9) being supported on a shaft (10) which is located in the lower region of an upright wall (4), extends parallel with respect to the saw blade plane (5) and is laterally retained against rotation about the shaft (10).

2. Sliding table according to Claim 1, characterised in that the shaft is formed as a bearing rod (10) which is connected to the profile rail (9) by means of two bearing blocks (11) and is retained in bearing recesses (12) by means of two supporting angles (13) arranged on the upright wall (4).

3. Sliding table according to Claims 1 and 2, characterised in that the supporting angles (13) consist of profiled parts (14) which are screwed onto the upright wall (4) and comprise a support arm (15) projecting downwards from the upright wall with a support (16) for the profile bar (9) when it is let down.

4. Sliding table according to Claims 1 and 2, characterised in that the bearing recesses (12) of supporting angles (13) are formed as groove recesses which are open at the top, are adapted to the cross-section of the bearing rod (10) and in which a resilient securing bolt (17) for the inserted bearing rod (10) engages laterally.

5. Sliding table according to Claim 4, characterised in that initial tapped holes (18), in which adjusting screws (19) for adjusting the position of the bearing point (10) engage, open into the bearing recesses (12) in a perpendicular manner from below.

6. Sliding table according to Claims 4 and 5, characterised in that the supporting angles (13) are provided with two tapped holes which extend approximately perpendicular with respect to the first tapped holes (18) and through which the adjusting screws (21), which can be mounted on the upright wall (4), engage.

7. Sliding table according to Claim 2, characterised in that the bearing blocks (11) are provided at their ends facing away from the bearing rod (10) with clamp arms (22) which can be applied against a clamping strip (24), forming part of the profile rail (9), by means of a clamping screw (23) or the like.

8. Sliding table according to Claims 1 and 2, characterised in that above its bearing rod (10) the profile rail (9) comprises a guide groove (26) for a slide ring (27) or the like, provided with an open slot (25), it being possible to connect the slide ring (27) or the like to the upright wall (4).

9. Sliding table according to Claim 8, characterised in that the slide ring (27) is connected to a securing angle (28) which has a free fork end (29) by means of which it can be secured to a tapped hole (31) of the upright wall (4) by means of a winged screw (30).

10. Sliding table according to Claim 9, characterised in that the tapped hole (31) is disposed in a wall section (32), of the upright wall (4), extending perpendicular with respect to the bearing rod (10).

11. Sliding table according to Claim 8, characterised in that a setscrew (33), which extends perpendicular to the guide groove (26) and can be inserted in the upright wall (4), is associated with the slide ring (27).

12. Sliding table according to Claim 1, for a combined table and mitre box saw, characterised in that the profile rail (9) and its mounting (10, 11) are dimensioned in such a way that one edge of the sliding carriage (8) lies at the level of the side of the operating plate (2) used for the mitre box sawing operation when the profile rail is in the let-down position (9').

13. Sliding table according to Claims 1 and 2, characterised in that the bearing rod (10) is provided at least one end with a thread (35) and a nut (36) disposed vertically against rotation with respect to a bearing block (11), and at the other end with a handle (37) by means of which an axial bracing between the support angles (13) and the bearing blocks (11) can be attained.

14. Sliding table according to Claims 8 and 9, characterised in that winged screws (38), which engage through a clamping counterpart (40) disposed rigidly on the securing angle (28), are associated with the slide ring (27).

15. Sliding table according to Claim 1, characterised in that the profile rail (9) and its mounting (10, 11) are dimensioned such that both guide rods (7) lie at the level of the side of the operating plate (2) used for the mitre box sawing operation when the sliding carriage (8) is removed.

**Revendications**

1. Table coulissante pour des scies circulaires, notamment pour des scies à table et à onglets combinées, comportant un plateau de travail susceptible de tourner pour l'ensemble à scie et qui est monté, de façon à pouvoir pivoter, entre deux parois de montants d'un dispositif de montants, un bâti de guidage étant prévu sur l'une des parois de montant, avec des barres de guidage, s'étendant parallèlement au plan de la lame de la scie, pour un chariot coulissant, table coulissante caractérisée en ce que le bâti de guidage est constitué par un rail profilé (9), pourvu des barres de guidage (7) fixées à sa face supérieure, et qui s'applique sur un axe (10) situé dans la zone inférieure d'une paroi de montant (4) et s'étendant parallèlement au plan (5) de la lame de scie, et est maintenu latéralement contre une possibilité de tourner autour de l'axe (10).

2. Table coulissante selon la revendication 1, caractérisée en ce que l'axe est constitué sous la forme d'une tige de support (10) reliée par deux appuis (11) au rail profilé (9), et qui est maintenue dans des évidements de support (12) par deux cornières porteuses (13) montées sur la paroi de montant (4).

3. Table coulissante selon les revendications 1 et 2, caractérisée en ce que les cornières porteuses (13) sont constituées par des pièces profilées (14) vissées sur la paroi de montant (4), et qui comportent un bras d'appui (15) faisant saillie de la paroi de montant et pourvu d'un support (16) pour le rail profilé (9) rabattu.

4. Table coulissante selon les revendications 1 et 2, caractérisée en ce que les évidements de support (12) des cornières porteuses (13) sont constitués sous la forme d'entailles de rainures ouvertes vers le haut, adaptées à la section transversale de la tige de support (10) et dans lesquelles est engagé latéralement un boulon de fixation (17) élastique pour la tige de support (10) insérée.

5. Table coulissante selon la revendication 4, caractérisée en ce que dans les évidements de support (12) débouchent verticalement d'en-bas de premiers alésages taraudés (18), dans lesquels sont engagées des vis de réglage (19) pour régler la position du point d'appui (10).

6. Table coulissante selon les revendications 4 et 5, caractérisée en ce que les cornières porteuses (13) sont pourvues de seconds alésages taraudés s'étendant à peu près perpendiculairement aux premiers alésages taraudés (18), et à travers lesquels passent des vis de réglage (21) pouvant s'appliquer contre la paroi de montant (4).

7. Table coulissante selon la revendication 2, caractérisée en ce que les appuis (11) sont pourvus, à leurs extrémités situées à l'opposé de la tige de support (10), de bras de serrage (22) qui, à l'aide d'une vis de serrage (23) ou autre semblable, peuvent s'appliquer sur une tige de serrage (24) formant une partie du rail profilé (9).

8. Table coulissante selon les revendications 1 et 2, caractérisée en ce que le rail profilé (9) comporte, au-dessus de sa tige de support (10), une rainure de guidage (26), présentant une fente ouverte (25), pour un coulisseau (27) ou autre élément semblable, qui est susceptible d'être relié à la paroi de montant (4).

9. Table coulissante selon la revendication 8, caractérisée en ce que le coulisseau (27) est relié à une cornière de fixation (28), qui comporte une extrémité libre en forme de fourche (29), par laquelle elle peut, par l'intermédiaire d'une vis à oreilles (30), se fixer à un alésage taraudé (31) de la paroi de montant (4).

10. Table coulissante selon la revendication 9, caractérisée en ce que l'alésage taraudé (31) est ménagé dans un tronçon de paroi (32), de la paroi de montant (4), s'étendant perpendiculairement à la tige de support (10).

11. Table coulissante selon la revendication 8, caractérisée en ce que, au coulisseau (27) est associée une vis de réglage (33) s'étendant perpendiculairement à la rainure de guidage (26) et susceptible de s'insérer contre la paroi de montant (4).

12. Table coulissante selon la revendication 1 pour une scie à table et à onglets combinée, caractérisée en ce que le rail profilé (9) et son logement (10, 11) sont dimensionnés de telle manière, qu'un bord du chariot coulissant (8), lorsque le rail profilé est en position rabattue (9'), se situe au niveau de la face du plateau de travail (2) utilisée pour scier avec scie à onglets.

13. Table coulissante selon les revendications 1 et 2, caractérisée en ce que la tige de support (10) est pourvue, au moins à une extrémité, d'un filetage (35) et d'un écrou (36) monté de façon à ne pas pouvoir tourner par rapport à un appui (11), et à l'autre extrémité est pourvue d'une poignée (37), par l'intermédiaire de laquelle on peut assurer un resserrement axial entre les cornières porteuses (13) et les appuis (11).

14. Table coulissante selon les revendications 8 et 9, caractérisée en ce que, au coulisseau (27) sont associées des vis à oreilles (38), qui pénètrent à travers une contre-pièce de serrage (40) montée de façon fixe sur la cornière de fixation (28).

15. Table coulissante selon la revendication 1, caractérisée en ce que le rail profilé (9) et son logement (10, 11) sont dimensionnés de telle manière, que les deux barres de guidage (7), lorsque le chariot coulissant (8) a été enlevé, se situent au niveau de la face du plateau de travail (2) utilisée pour scier avec scie à onglets.

Fig. 1

Fig.2

Fig. 3

Fig. 4